# EUROPEAN PATENT SPECIFICATION

(11) **EP 1 037 203 B1**
(45) Date of publication and mention of the grant of the patent: **15.12.2004**
(21) Application number: 00105613.4
(22) Date of filing: 16.03.2000
(51) Int. Cl.: G11B 7/085, G11B 19/24, G11B 19/247, G11B 19/28, G11B 27/10, G11B 27/19, G11B 19/20

(54) **Constant linear velocity disk reproducing apparatus**
Plattenwiedergabegerät mit konstanter Lineargeschwindigkeit
Appareil de lecture de disque à vitesse linéaire constante

(30) Priority: 18.03.1999 JP 7454999
(43) Date of publication of application: 20.09.2000
(73) Proprietor: Sanyo Electric Co., Ltd., Moriguchi-shi, Osaka (JP)
(72) Inventor: Ogata, Hitoshi, Sakai-shi, Osaka (JP)
(74) Representative: Glawe, Delfs, Moll & Partner

(56) References cited:
- PATENT ABSTRACTS OF JAPAN vol. 1995, no. 09, 31 October 1995 (1995-10-31) & JP 07 153182 A (MATSUSHITA ELECTRIC IND CO LTD), 16 June 1995 (1995-06-16)

## Description

### BACKGROUND OF THE INVENTION

The present invention relates to a disk reproducing apparatus and, more particularly, an apparatus for reading data from a disk as a disc-shaped recording medium on which digital data is recorded and reproducing the data.

An apparatus for recording digital data onto a disk as a disc-shaped recording medium such as CD, MD, or DVD, reading the data from such a disk and reproducing original data is being widespread. There are a disk reproducing apparatus of a CAV (Constant Angular Velocity) type in which the rotational speed of the disk is set as constant angular velocity and that of a CLV (Constant Linear Velocity) type in which the rotational speed of the disk is set as constant linear velocity. In the latter type, the rotational speed of a disk changes according to the data writing/readout position in the radial direction of the disk. Specifically, when data is written/read at the innermost radius of the disk, the rotational speed is the maximum. As the data writing/readout position moves toward the outer radius of the disk, the rotational speed becomes lower.

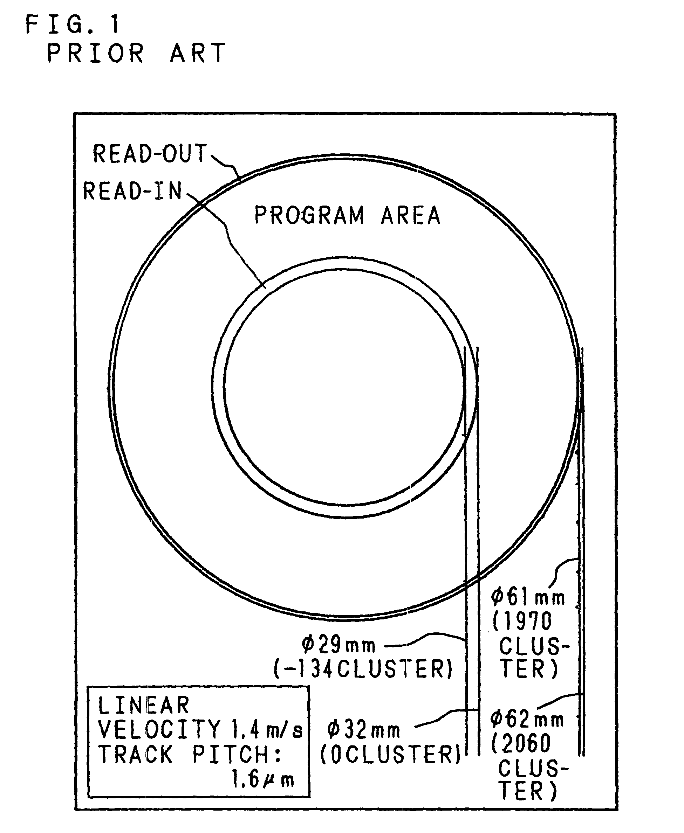

FIG. 1 is a schematic diagram showing the structure of an MD as an example of the CLV disk. A program area from 0 cluster to 1970 cluster is formed at a track pitch of 1.6 *µ*m in a range of the diameter from 32 mm to 61 mm. A read-in area from 0 cluster to -134 cluster is formed on the inner radius side and a read-out area from 1970 cluster to 2060 cluster on the outer radius side is formed. The position in the 2060 cluster corresponds to a position of the diameter of 62 mm. The outer diameter of the disk is 64 mm. The linear velocity for data writing/readout is 1.4 m/s.

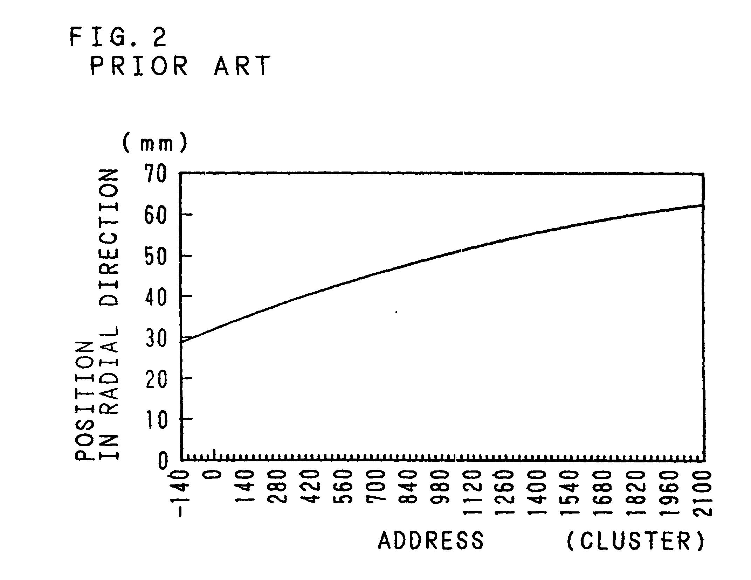

FIG. 2 is a graph showing the relation between a position in the radial direction of the disk shown in the vertical axis and the address of a cluster shown in the lateral axis. It is understood that the relation is not directly proportional but the address increasing ratio becomes lower toward the outer radius side.

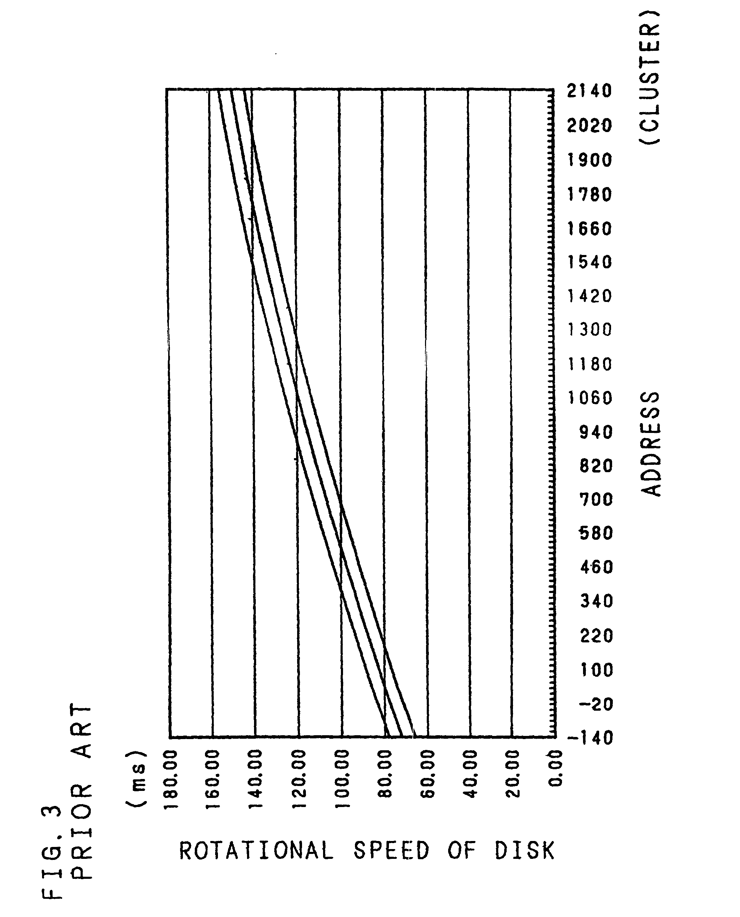

FIG. 3 is a graph showing the relation between a position in the radial direction (address of a cluster) of a disk shown in the lateral axis and the rotational speed (time required for one rotation: unit is ms) of the disk shown in the vertical axis. As the address increases, in other words, as the data writing/readout position moves toward the outer radius of the disk, the time required for one rotation of the disk becomes longer. That is, it is understood that the rotational speed of the disk is lowered. Three curves show the cases where the recording linear velocities are 1.2 m/s, 1.3 m/s, and 1.4 m/s, respectively, from the upper one.

When such a disk of the CLV type is shifted from a servo-off state to a servo-on state, specifically, from a state where the disk is stopped and the pickup is not reading data to a state where the disk is rotating and the pickup can read data from a position in which data recorded on the disk is to be read, by forcedly accelerating the disk to the rotational speed according to the position (specified rotational speed) in advance, data readout can be immediately started. In the disk of the CLV type, however, since the specified rotational speed of the disk varies according to the position in which data is read as described above, the disk cannot be forcedly accelerated.

Due to the above, conventionally, for example, a servo is turned on when the pickup is positioned in a predetermined position of a disk (such as the innermost radius, outermost radius, or the like) and then the pickup is moved to the position in which data is to be read, or servo is turned on without forced acceleration. In the case of employing the former method of turning on the servo in a predetermined position, since the operation of moving the pickup to the predetermined position in the disk is performed each time, power and time for the operation is necessary. In the latter method of turning on the servo without forced acceleration, since the disk is not rotating at the specified rotational speed according to the data readout position, there is a problem such that an operation of leading the disk to the specified rotational speed is not performed smoothly.

In particular, as a countermeasure against vibration, a technique of storing data read from a disk into a buffer memory and reproducing the stored data is employed by an apparatus for reproducing an MD. Consequently, intermittent readout such that a certain amount of data is read from the disk at the time of data readout and stored in a buffer memory and the rotation of the disk is stopped until the amount is reduced to a certain degree to suspend the data readout, can be employed. In the case of employing the intermittent readout, since the disk is not unnecessarily rotated, it contributes to reduced power consumption. When readout is restarted (servo-on) from the state (servo-off state) where the data readout is suspended, however, a problem such that the data readout cannot be promptly restarted due to the above-described circumstances arises. Especially, since the turn-on/off of the servo is frequently repeated at the time of reproduction of an MD according to the intermittent readout, when the data readout can be restarted more promptly at time of the servo-on, the servo-off period can be increased by that amount, that is, the period in which the disk is not rotated can be increased. Thus, the power consumption can be reduced more.

### BRIEF SUMMARY OF THE INVENTION

A main object of the invention is to provide a disk reproducing apparatus which can shift from a servo-off state to a servo-on state more promptly.

This object is achieved by a disk reproducing apparatus according to the claim.

Patent abstract of Japan of JP-1-153182 discloses a disk reproducing apparatus according to the preamble of the claim wherein an address is stored in a storage circuit at which a recording head is placed, and based on this address a target speed is acquired by reading a ROM.

In such a disk reproducing apparatus, prior to restart of the data readout from the disk by the pickup, the disk is preliminarily rotated at the rotational speed of the disk at the time when the data readout from the disk by the pickup was stopped. Consequently, the time taken to start again the data readout from the disk by the pickup is shortened.

The disk reproducing apparatus of the invention as described above is suitable as a disk reproducing apparatus of an intermittent readout type which stores read data in a buffer memory and stops the data readout until the amount of data stored in the buffer memory becomes a predetermined amount or less. The time taken to restart the data readout by the pickup can be shortened and the period of suspending the data readout from the disk can be increased by that amount. Consequently, the power consumption can be reduced further.

The above and further objects and features of the invention will more fully be apparent from the following detailed description with accompanying drawings.

### BRIEF DESCRIPTION OF THE SEVERAL VIEWS OF THE DRAWINGS

FIG. 1 is a schematic diagram showing the structure of an MD as an example of a CLV disk.
FIG. 2 is a graph showing the relation between a position in the radial direction of an MD as an example of the CLV disk and the address of a cluster.
FIG. 3 is a graph showing the relation between a position in the radial direction (address of a cluster) of an MD as an example of the CLV disk and the rotational speed of the disk.
FIG. 4 is a block diagram showing an example of the configuration of a disk reproducing apparatus according to the invention.
FIG. 5 is a flowchart useful for understanding the invention showing a processing procedure for a servo operation at the time of reproduction of a disk reproducing apparatus.
FIG. 6 is a flowchart showing another example of the processing procedure for the servo operation at the time of reproduction of the disk reproducing apparatus of the invention.

### DETAILED DESCRIPTION OF THE INVENTION

The present invention will be described in detail hereinbelow on the basis of the drawings showing embodiments.

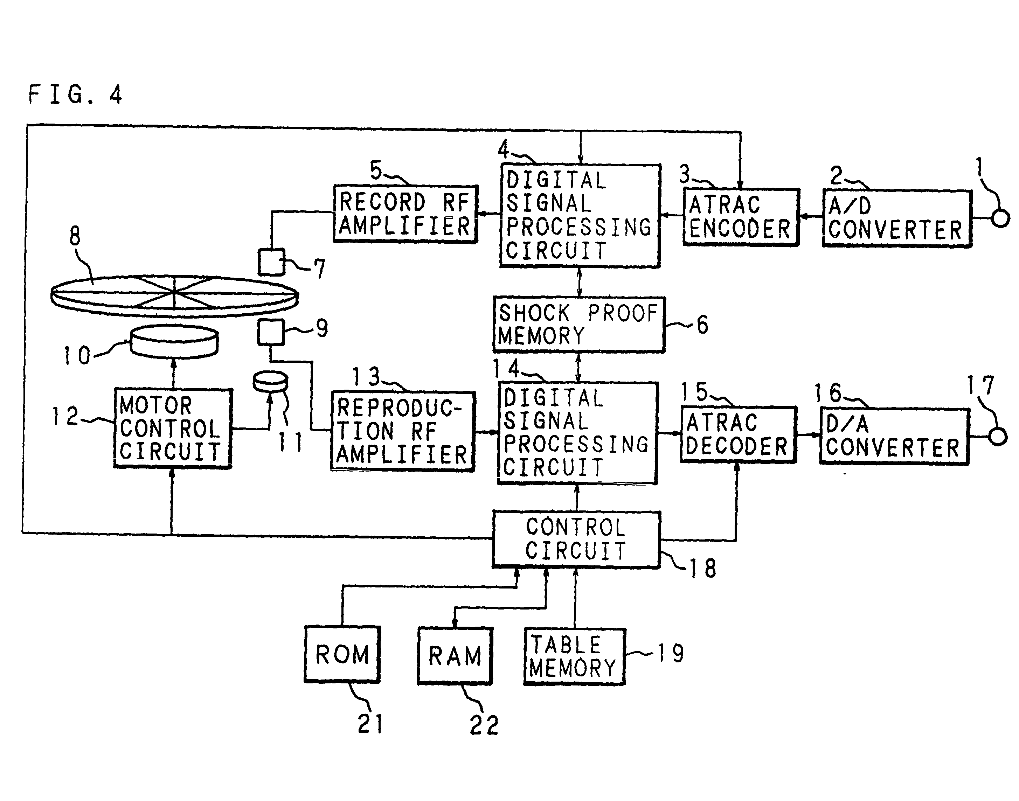

FIG. 4 is a block diagram showing an example of the configuration of a disk reproducing apparatus according to the invention (hereinbelow, referred to as an apparatus of the invention). In the example, an MD is used as a disc-shaped medium and the apparatus capable of both recording and reproducing data is shown.

In FIG. 4, reference numeral 1 denotes an input terminal (LINE IN terminal) to which an analog audio signal to be recorded by the apparatus of the invention is supplied and 17 indicates an output terminal (LINE OUT terminal) from which the analog audio signal reproduced by the apparatus of the invention is outputted.

The analog audio signal from the input terminal 1 is sampled by an A/D converter 2 at a predetermined frequency and converted into a digital audio signal and the digital audio signal is supplied to an ATRAC encoder 3. The ATRAC encoder 3 compresses and encodes the inputted digital audio signal by an ATRAC (Adaptive Transform Acoustic Coding) method as a compression and coding method for MD and outputs the resultant signal to a digital signal processing circuit 4. The digital signal processing circuit 4 receives the compressed and encoded data outputted from the ATRAC encoder 3, adds an error correcting code and also a subcode signal and the like, and outputs the resultant signal to a record RF (Radio Frequency) amplifier 5. The compressed and encoded data supplied to the record RF amplifier 5 is converted into a signal to be recorded on a disk 8 and the resultant signal is outputted to a magnetic head 7.

As the disk 8, as described above, an MD (optical disk or magnetooptic disk) is used and is rotated by a spindle motor 10 driven by the control of a motor control circuit 12. The data is recorded on the disk 8 by the magnetic head 7 and read from the disk 8 by a pickup shown by reference numeral 9. In practice, at the time of recording data, a magnetic field is applied by the magnetic head 7 in correspondence with the data to be recorded in a state where a laser beam is irradiated. For reading data, different optical systems for a reproduction only disk as an optical disk and a recordable disk as a magnetooptic disk are used. The details are omitted here.

The rotational speed of the disk 8 can be detected by an FG (Frequency Generator) in the motor control circuit 12 as a servo mechanism of the spindle motor 10.

Reference numeral 11 denotes a thread motor as a pickup moving means for moving the pickup 9 in the radial direction relative to the disk 8. The moving direction and the movement amount are controlled by the motor control circuit 12 in accordance with a tracking error signal outputted from the pickup 9.

A signal read from the disk 8 by the pickup 9 is converted into digital data, specifically, digital data in a state outputted from the digital signal processing circuit 4 by a reproduction RF amplifier 13 and the digital data is supplied to a digital signal processing circuit 14. The digital signal processing circuit 14 performs a process such as error correction on the digital data received from the reproduction RF amplifier 13, takes out the subcode signal and so on added by the digital signal processing circuit 4, and supplies the resultant signal to an ATRAC decoder 15. The ATRAC decoder 15 performs a process opposite to that of the ATRAC encoder 3, that is, decompresses and decodes the data compressed and encoded according to the ATRAC method, thereby converting the data back into a digital audio signal. The digital audio signal obtained by the decoding of the ATRAC decoder 15 is converted into an analog audio signal by a D/A converter 16 and the analog audio signal is outputted from the output terminal 17.

Reference numeral 6 denotes a shock proof memory which is connected to both the digital signal processing circuits 4 and 14. At the time of reproduction, the shock proof memory 6 temporarily stores data for reproduction supplied from the digital signal processing circuit 14 for reproduction. At the time of recording, the shock proof memory 6 temporarily stores data for recording supplied from the digital signal processing circuit 4 for recording. By the above operations, the shock proof memory 6 deals with what is called a sound dropout phenomenon occurring when a vibration is applied at the time of reproduction or recording.

Reference numeral 18 denotes a control circuit using a microcomputer. The control circuit 18 performs the compressing and encoding process by the ATRAC encoder 3, the decoding process by the ATRAC decoder 15, processes regarding the error correction code and the subcode signal by the digital signal processing circuits 4 and 14, the control of the rotational speed of the disk 8 by controlling the motors 10 and 11 via the motor control circuit 12, and the control of positioning the pickup 9.

Reference numeral 19 denotes a table memory for storing the address of a cluster on the disk 8 and the specified rotational speed of the disk 8 corresponding to the address as shown in FIG. 3 in the form of a table. Reference numeral 21 denotes a ROM storing a control procedure (program) of the control circuit 18 or the like and reference numeral 22 indicates a RAM used as a working memory at the time of control execution by the control circuit 18.

Although not shown in FIG. 4, obviously, a group of keys for sending various instructions from the user to the apparatus of the invention and a display for notifying the user of various information from the apparatus of the invention are also provided.

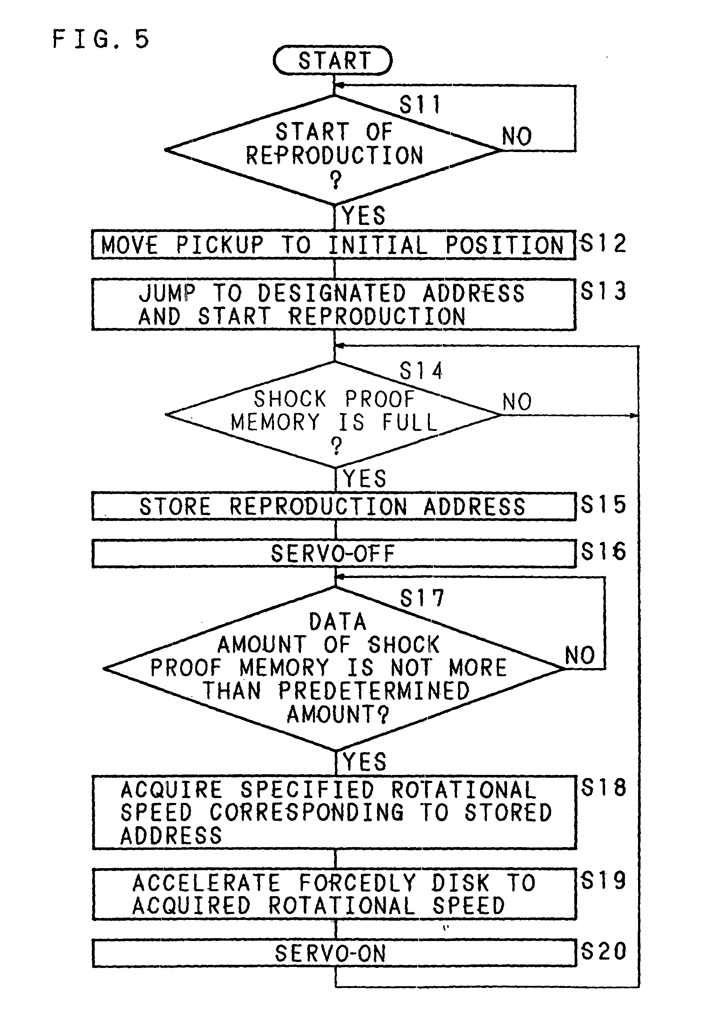

FIG. 5 is a flowchart showing a procedure of processes performed by the control circuit 18 for servo operation at the time of reproduction of the disk reproducing apparatus with the configuration as described above.

In the following description, the operation of moving the pickup 9 to an address position in which data on the disk 8 is read, by the thread motor 11 while rotating the disk 8 by the spindle motor 10 will be called a servo operation. Stop of the servo operation (servo-off) therefore denotes that the power source supply to the spindle motor 10 and the thread motor 11 is shut off to stop the motors. In this case, the pickup 9 is stopped in the position at that time point.

First, when the reproduction is started ("YES" in step S11), the control circuit 18 moves the pickup 9 to the initial position on the innermost radius of the disk 8 (step S12). Then the pickup 9 is jumped to a designated address and the reproduction is started (step S13). By the operations, the reproduction from the position designated by the user is started.

When the reproduction is started as mentioned above, since speed of data readout from the disk 8 by the pickup 9 is faster than speed of digital data reproduction by the ATRAC decoder 15 or the like, data is sequentially stored in the shock proof memory 6. When the shock proof memory 6 becomes full of data ("YES" in step S14), the control circuit 18 stores the reproduction address at the time point into the RAM 22 (step S15) and stops the servo operation (step S16). Consequently, the data readout by the pickup 9, namely, the storing of data to the shock proof memory 6 is stopped.

For a while after that, the control circuit 18 does not read the data from the disk 8 but only reproduces data stored in the shock proof memory 6. When the amount of the data stored in the shock proof memory 6 decreases to a predetermined amount ("YES" in step S17), the control circuit 18 acquires, a specified rotational speed corresponding to the address stored in the RAM 22, in other words, the reproduction address at the time point when the servo was turned off previously (step S18). The control circuit 18 controls the motor control circuit 12 to start the rotation of the spindle motor 10 and accelerate forcedly the disk 8 to the rotational speed acquired in step S18 (step S19). After that, the control circuit 18 turns on the servo again (step S20). Since the disk 8 already rotates at the specified rotational speed at the time point of the servo-on, the data readout from the dick 8 by the pickup 9 can be immediately started.

In the case of acquiring the specified rotational speed of the disk 8 in step S18, the rotational speed is determined by referring to the specified rotational speed stored in the table memory 19 by the control circuit 18 each time as necessary on the basis of the address stored in the RAM 22. The control circuit 18 may compute the specified rotational speed by a predetermined mathematical expression on the basis of the address stored in the RAM 22.

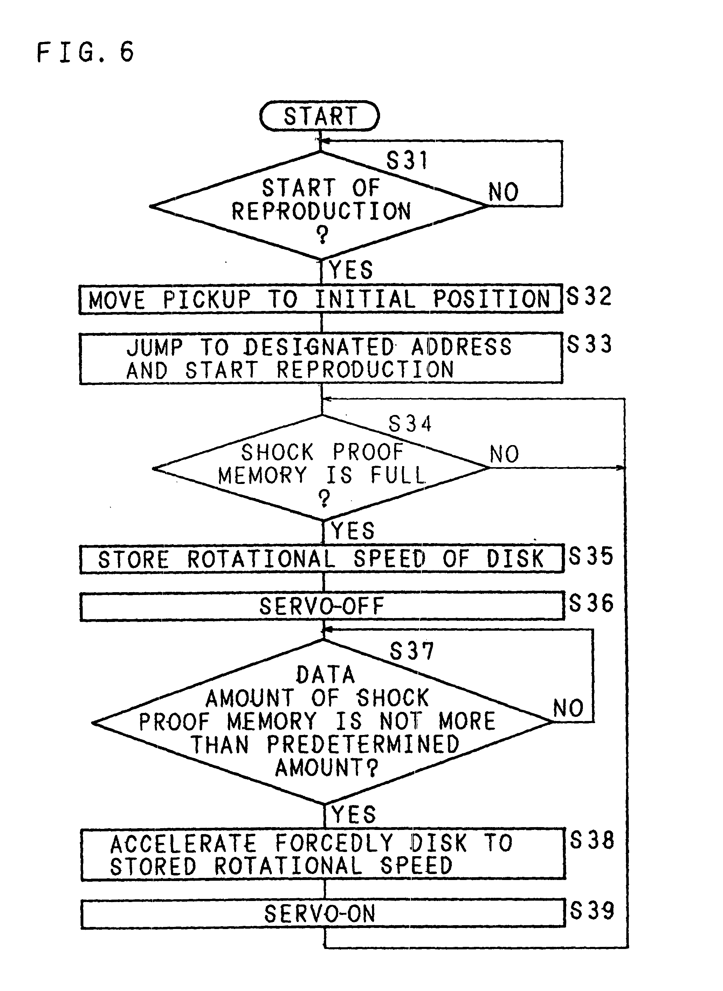

Although the address in which the pickup 9 reads the data at the time of servo-off is stored in the foregoing embodiment, the rotational speed of the disk 8 may be stored as it is. FIG. 6 is a flowchart showing the processing procedure by the control circuit 18 for the servo operation at the time of reproduction of the disk reproducing apparatus of the invention in such a case.

First, when the reproduction is started ("YES" in step S31), the control circuit 18 moves the pickup 9 to the initial position on the innermost radius of the disk 8 (step S32), makes the pickup 9 jump to the designated address, and starts reproduction (step S33). By the operations, the reproduction from the position designated by the user is started.

When the reproduction is started as mentioned above, since the speed of data readout the disk 8 by the pickup 9 is faster than the actual reproduction speed, data is sequentially stored in the shock proof memory 6. When the shock proof memory 6 becomes full of data ("YES" in step S34), the control circuit 18 stores the rotational speed of the disk 8 at the time point into the RAM 22 (step S35) and stops the servo operation (step S36). By the operations, the data readout by the pickup 9, namely, the storing of data to the shock proof memory 6 is stopped.

For a while after that, the control circuit 18 does not read the data from the disk 8 but only reproduces data stored in the shock proof memory 6. When the amount of the data stored in the shock proof memory 6 decreases to a predetermined amount ("YES" in step S37), the control circuit 18 reads the rotational speed stored in the RAM 22, and controls the motor control circuit 12 to start the rotation of the spindle motor 10 and accelerate forcedly the disk 8 to the rotational speed read from the RAM 22 (step S38). After that, the control circuit 18 turns the servo on again (step S39). Since the disk 8 already rotates at the specified rotational speed at the time point of the servo-on, the data readout from the disk 8 by the pickup 9 can be immediately started.

Although the MD is used as the disc-shaped medium in each of the foregoing embodiments, obviously, the invention can be applied to a disk reproducing apparatus using a disk of any other CLV types, that is, CD, DVD, or the like.

As described above in detail, according to the disk reproducing apparatus of the invention, prior to the restart of the data readout from the disk by the pickup, the disk is preliminarily accelerated to the rotational speed of the disk which is the speed when the data readout from the disk was stopped, and is rotated. Consequently, the time taken to restart the data readout by the pickup is shortened. The period during which the data readout from the disk is suspended can be made accordingly longer, so that the further reduction in power consumption can be realized.

According to the disk reproducing apparatus of the invention, since the relation between the information regarding the position in the radial direction on the disk of the pickup and the corresponding specified rotational speed of the disk is prestored, the specified rotational speed in the case of rotating the disk in advance can be promptly known. Thus, further reduction in power consumption can be realized.

## Claims

1. A disk reproducing apparatus for rotating a disk (8) on which digital data are recorded so that a linear velocity of the disk (8) becomes constant with respect to a pickup (9) reading data while moving in the radial direction over the disk (8) and for stopping the rotation of the disk (8) while the data readout by the pickup (9) is suspended, comprising:
storing means (22); and
rotation control means (10,12,18) for preliminarily rotating the disk (8) in accordance with information stored in the storing means (22) in cases when the data readout from the disk (8) by the pickup (9) is restarted,
**characterized in that** said storing means (22) stores information regarding the rotational speed of the disk (8) when the data readout from the disk (8) by the pickup (9) is suspended.

## Patentansprüche

1. Plattenwiedergabevorrichtung zum Drehen einer Platte (8), auf der digitale Daten aufgezeichnet sind, derart, dass die Lineargeschwindigkeit der Platte (8) mit Bezug auf einen Abnehmer (9), der Daten liest, konstant wird, wobei er sich in Radialrichtung über die Platte (8) bewegt, und zum Anhalten der Drehung der Platte (8), während das Datenlesen durch den Abnehmer (9) ausgesetzt ist, mit:
Speichermitteln (22) und
Drehsteuermitteln (10, 12, 18) zum vorhergehenden Drehen der Platte (8) in Übereinstimmung mit Informationen, die in den Speichermitteln (22) gespeichert sind, in Fällen, wenn das Datenlesen von der Platte (8) durch den Abnehmer (9) neu gestartet wird,
**dadurch gekennzeichnet, dass** die Speichermittel (22) Informationen bezüglich der Drehgeschwindigkeit der Platte (8) speichern, wenn das Datenauslesen von der Platte (8) durch den Abnehmer (9) ausgesetzt wird.

## Revendications

1. Dispositif de reproduction de disque pour faire tourner un disque (8) sur lequel des données numériques sont enregistrées de sorte qu'une vitesse linéaire du disque (8) devienne constante par rapport à une tête de lecture (9) lisant les données tout en se déplaçant dans la direction radiale sur le disque (8) et pour arrêter la rotation du disque (8) alors que la lecture des données par la tête de lecture (9) est interrompue, comprenant :
des moyens de mémorisation (22) ; et
des moyens de commande de rotation (10, 12, 18) pour faire tourner initialement le disque (8) conformément à des informations mémorisées dans les moyens de mémorisation (22) dans les cas où la lecture des données du disque (8) par la tête de lecture (9) est redémarrée,
**caractérisé en ce que** lesdits moyens de mémorisation (22) mémorisent des informations concernant la vitesse de rotation du disque (8) lorsque la lecture des données du disque (8) par la tête de lecture (9) est interrompue.
